# EUROPEAN PATENT SPECIFICATION

(11) **EP 4 246 313 B1**
(45) Date of publication and mention of the grant of the patent: **07.01.2026**
(21) Application number: 21905486.3
(22) Date of filing: 25.11.2021
(51) Int. Cl.: G06F 8/71, G06F 8/41

(54) **CODE ANALYSIS METHOD AND RELATED DEVICE**
CODEANALYSEVERFAHREN UND ZUGEHÖRIGE VORRICHTUNG
PROCÉDÉ D'ANALYSE DE CODE ET DISPOSITIF ASSOCIÉ

(30) Priority: 16.12.2020 CN 202011491105
(43) Date of publication of application: 20.09.2023
(73) Proprietor: Huawei Cloud Computing Technologies Co., Ltd., Guizhou 550025 (CN)
(72) Inventor: WEI, Zhao, Shenzhen, Guangdong 518129 (CN); LIANG, Guangtai, Shenzhen, Guangdong 518129 (CN)
(74) Representative: Pfenning, Meinig & Partner mbB
(86) International application number: PCT/CN2021/133166
(87) International publication number: WO 2022/127557

(56) References cited:
- CN-A- 109 144 562
- CN-A- 109 144 562
- CN-A- 111 190 583
- CN-A- 111 190 583
- CN-C- 100 452 038
- US-A- 6 098 079
- US-A1- 2008 086 718
- US-A1- 2019 114 166
- US-A1- 2019 339 964
- US-A1- 2022 334 812
- US-B1- 9 395 979

## Description

This application claims priority to Chinese Patent Application No. 202011491105.3, filed with the China National Intellectual Property Administration on December 16, 2020 and entitled "CODE ANALYSIS METHOD AND RELATED DEVICE".

### TECHNICAL FIELD

This application relates to the field of software development technologies, and more specifically, to a code analysis method and a related device.

### BACKGROUND

Currently, programs are developed based on a distributed environment through multi-user collaboration. During collaborative development, programmers develop code separately and do not synchronize the code with a trunk and branches for a long time, bringing accumulation of a large amount of conflicts, and bringing great inconvenience to combination and resolution for a later version.

To resolve this problem, a method for detecting code conflicts based on artificial intelligence (Al, artificial intelligence) is proposed in the industry. The method trains a random forest binary classification model, collects some information in the code (for example, a quantity of files that is changed accordingly, a quantity of committed (commit) codes between earlier and latest committed codes, and a quantity of files added, deleted, renamed, modified, and copied in a branch), and determines, based on the collected information and the trained random forest model, whether the combination of two branches causes conflicts.

However, this method is undesirable in actual application, hardly applicable to actual scenarios. CN 109 144 562 A discloses a kind of smart code publication alarm method based on zookeeper, include the following steps: step 1: the client/server according to ZooKeeper, the branch for constructing main branch and being attached thereto, step 2: will be distributed over the application system file publishing in main branch and branch and be registered as file node, form more set node configuration structures; Step 3: the updated application system file publishing of child node being continued to be uploaded to upper one layer of host node; Step 4: when other all child nodes receive message package under host node, according to the changing file name in message package, it is compared with the application system file publishing for itself being responsible for establishment, with the application system file publishing in decision message packet and the application system file publishing at child node with the presence or absence of modification conflict; The present invention is able to solve the problem of code coverage problem caused by due to multiple-limb or more staff developments frequently occurs, to improve the efficiency and stability of application system version updating. CN 111 190 583 A discloses an associated conflict block presenting method and equipment. The method comprises the following steps: acquiring a first conflict file, wherein the first conflict file comprises a plurality of code blocks, and each code block comprises a code segment of a current version of the code block, a code segment of a basic version of the code block and a code segment of a version to be merged of the code block; receiving a first instruction which is triggered by a user interface and used for activating a code block to be processed, wherein the type of the code block to be processed is an unresolved conflict block or a unilateral change block; presenting code segments contained in the code block to be processed and indexes of N associated code blocks of the code block to be processed on the user interface. US2019/339964 describes a real-time mark-up of the code file while editing. A client computing device includes a display and a processor. The processor executes a distributed source code authoring management system configured to communicate with a codebase host server. The processor outputs a graphical user interface (GUI) of the distributed source code authoring management system. The processor receives a first edit to a code file in an editor window included in the GUI. The editor window provides real-time mark-up of the code file. The processor sends the first edit to the codebase host server. The processor receives , from the codebase host server , a first conflict notification indicating that the first edit and at least a second edit to the code file have a pending merge conflict. The processor shows this on the display in the editor window.

### SUMMARY

This application provides a code analysis method and a related device, which may help developers quickly find modified code, and further determine whether the modified code affects compiled programs. According to a first aspect, embodiments of this application provide a code block processing method performed by a server, including:
obtaining attribute information of a changed code block, where the attribute information of the changed code block includes identity information of a changed file and a location of the changed code block in the changed file, the changed code block is located in a terminal of a distributed system, and the distributed system includes a plurality of terminals configured to provide code compilation; determining a base version of the changed file based on the identity information of the changed file; determining, based on the location of the changed code block in the changed file, whether the base version of the changed file includes a target code block that overlaps the location of the changed code block; and if the base version of the changed file includes the target code block, warning at least one terminal in the distributed system.

In the foregoing technical solution, if a location of a code block being compiled (that is, the changed code block) overlaps a location of a code block that has been compiled (that is, the target code block), the terminal is warned, so that a programmer (referred to as a programmer A) learns that a code block has been modified by another programmer (referred to as a programmer B). In this way, the programmer A may determine whether a changed code block affects other parts of the code, and determine how to handle the changed code block based on a determination result. For example, if the changed code block does not affect other parts of the code, the programmer A may retain the changed code block; if the changed code block affects other parts of the code, the programmer A may communicate with the programmer B to determine whether it is necessary to cancel the modification of the code block or evaluate whether to modify an affected part of the code.

Objects for the warning may be all terminals that participate in code development in the distributed system, allowing all the participants to learn about a modification status of the code.

Objects for the warning may alternatively be a part of terminals in the distributed system. For example, the terminal may be a terminal of an author of the target code block. For another example, the terminals may be terminals used by all authors that participate in compiling the changed file.

The modification of a warning target code block may be prompted by using a pop-up window, or may be prompted by using a fixed prompt window in an integrated development environment (IDE, integrated development environment). In warning content, all content of the changed code block may be presented, or only location information of the changed code block is presented and all content of the changed code is presented when the warning content is selected. In addition, a difference between the changed code block and the target code block may be highlighted.

The warning the terminal in the distributed system includes: storing the changed code block to a conflict list of changed code; and pushing the conflict list of changed code to the at least one terminal in the distributed system.

In the foregoing technical solution, a conflicting code block is stored in a list manner. In this way, when there are a plurality of code blocks conflicting, a conflicting code block may be more intuitively determined.

With reference to the first aspect, in a possible implementation, the attribute information of the changed code block further includes an author of the changed code block; warning the terminal in the distributed system if the base version includes the target code block includes: determining that the author of the changed code block is different from an author of the target code block, and sending first warning information to a first target terminal in the distributed system, where the first target terminal is a terminal used by the author of the target code block, and the first warning information indicates that the target code block is modified.

In the foregoing technical solution, it is further determined whether the code block is modified by an original author of the code block. If the code is not modified by the original author, remind the original author that the code block is modified by another programmer. In this way, the original author may learn a latest status of the code. In addition, because an author of an original code block (that is, the target code block) is more familiar with the target code block, the original author can more quickly determine whether a problem occurs when another programmer modifies the code block, and/or whether another part of the code is affected.

With reference to the first aspect, in a possible implementation, the method further includes: determining whether the target code block overlaps a location of a particular code block in a code analysis library, where the particular code block includes a code block for defining a function or a code block for defining a variable; and sending, if the target code block overlaps the particular code block, second warning information to a second target terminal in the distributed system, where code compiled by the second target terminal includes a function or a variable defined by the particular code block, and the second warning information indicates that the function or the variable defined by the particular code block changes.

If a function or variable is faulty, the entire code may be greatly affected. Therefore, in the foregoing technical solution, when a code block for defining a function or a variable is modified, an author who writes the function or the variable may be reminded that the function or the variable compiled by the author changes. In this way, an original author of a function or a variable may easily master a latest status of the code. In addition, because an author of an original code block (that is, the target code block) is more familiar with the target code block, the original author can more quickly determine whether a problem occurs when another programmer modifies the code block, and/or whether another part of the code is affected.

With reference to the first aspect, in a possible implementation, if the target code block overlaps the particular code block, the method further includes: analyzing the changed code block, and determining key information of a first object defined by the changed code block; determining key information of a second object defined by the target code block, where the first object and the second object are functions, or the first object and the second object are variables; comparing the key information of the first object with the key information of the second object, and determining difference information between the key information of the first object and the key information of the second object, where the second warning information further indicates the difference information.

In the foregoing technical solution, modified key information is determined by analyzing a code block. In this way, the key information may be indicated only to the original author of the code block. The original author may determine the key information that is modified more intuitively without spending extra time finding the location of the modified code.

With reference to the first aspect, in a possible implementation, if the first object and the second object are functions, the key information includes any one or more of the following information: a name of the function, a parameter in the function, a return value in the function, a start line of the function, an end line of the function, a class to which the function belongs, a file name of the class to which the function belongs, a function name of another function called by the function, a parameter in the another function, a start line of the another function, an end line of the another function, a class to which the another function belongs, a file name of the class to which the another function belongs, and a type name of an invoker that invokes the function; or if the first object and the second object are variables, the key information includes one or more of the following information: a name of the variable, a start line of the variable, an end line of the variable, a type of the variable, and a variable value.

With reference to the first aspect, in a possible implementation, the obtaining attribute information of a changed code block includes: obtaining the attribute information of the changed code block that is sent by a collection agent module of the terminal in the distributed system.

According to a second aspect, embodiments of this application provide a computer device, wherein the computer device is a server. The computer device includes units configured to implement any one of the first aspect or the possible implementations of the first aspect.

According to a third aspect, embodiments of this application provide a computer program product. The computer program product includes computer program code. When the computer program code runs on a computer, the computer is enabled to perform the method according to any one of the first aspect or the possible implementations of the first aspect.

According to a fourth aspect, embodiments of this application provide a computer-readable storage medium. The computer-readable storage medium stores program code. When the computer-readable storage medium runs on a computer, the computer performs the method according to any one of the first aspect or the possible implementations of the first aspect.

### BRIEF DESCRIPTION OF DRAWINGS

FIG. 1 is a schematic diagram of a system to which an embodiment of this application is applied;
FIG. 2 is a schematic diagram of an implementation according to an embodiment of this application;
FIG. 3 is a schematic diagram of a collection agent module;
FIG. 4 is a schematic flowchart of a code block processing method according to an embodiment of this application;
FIG. 5 is a schematic block diagram of a structure of a computer device according to an embodiment of this application; and
FIG. 6 is a schematic block diagram of a structure of a computer device according to an embodiment of this application.

### DESCRIPTION OF EMBODIMENTS

The following describes technical solutions of this application with reference to accompanying drawings.

A "program" in embodiments of this application may be software, a game, an application (app, application), a web page, or the like that is formed by developers by compiling code in a programming language.

A system architecture of a distributed development environment and commands or functions used to implement functions described in embodiments of this application are described by using Git as an example. Git, which is a free and open source distributed version control system, uses a distributed version library without requiring server-side software for version control, facilitating source code release and communication.

It may be understood that, in addition to Git, the technical solutions of this application may also be applied to other distributed version control systems capable of implementing same or similar functions as Git.

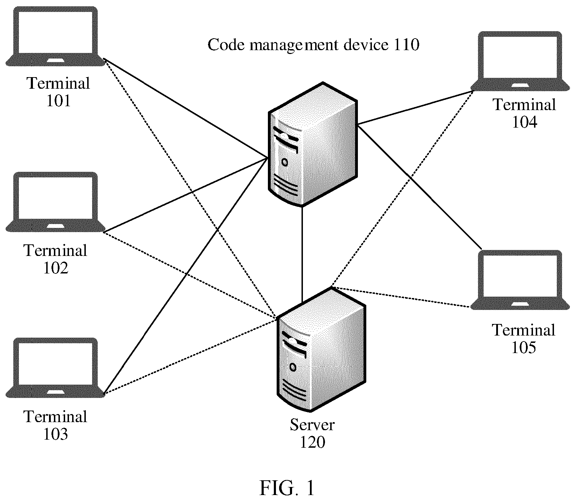

FIG. 1 is a schematic diagram of a system architecture applied to an embodiment of this application. As shown in FIG. 1, the system 100 includes a terminal 101, a terminal 102, a terminal 103, a terminal 104, a terminal 105, a code management device 110, and a server 120.

The following briefly describes a collaborative development process in a distributed environment with reference to the system 100 shown in FIG. 1.

The code management device 110 stores a code repository (which may also be referred to as a code warehouse) in which code files of developed programs. Different programmers clone code files from the code repository in the code management device 110 to terminals through different terminals, and locally perform code compilation for files.

For example, assuming that a programmer 1 uses the terminal 101 for code compilation. In this case, all code files in the code repository in the code management device 110 may be cloned to the code repository of the terminal 101, and code compilation is performed on the terminal 101. Assuming that a programmer 2 uses the terminal 102 to perform code compilation. In this case, all code files in the code repository in the code management device 110 may be cloned to the code repository of the terminal 102, and code compilation is performed on the terminal 102; and other cases are similar by analogy.

The code management device 110 may be a device having a data storage function, or may be a server, a terminal, or a computer device in another form.

To distinguish a code repository in the terminal from a code repository in the code management device, the code repository in the terminal may be referred to as a local repository (local repository), and the code repository in the code management device may be referred to as a central code repository or a remote repository (remote repository).

In addition to the local repository, the terminal further includes a work area and a cache area.

Code is compiled in the work area. The cache area is a place for storing a changed file added to the work area. The changed file may be further saved to the local repository and then pushed to the central code repository.

For example, the programmer 1 performs code compilation on a file 1 through the terminal 101. The programmer 1 modifies the file 1 in the work area (for example, adding new code to the file 1, deleting some code in the file 1, and/or modifying some code in the file 1) to obtain a changed file 1. For ease of distinguishing, a file 1 before the programmer 1 modifies the file 1 may be referred to as a file 1-a, and a changed file 1 is referred to as a file 1-b. In this case, a file 1 in the work area is a file 1-b, a file 1 in the local repository is a file 1-a, and a file 1 in the remote repository is also a file 1-a. The programmer 1 may store the file 1-b to the cache area through a git add command, then submit the file 1-b in the cache area to the local repository through a git commit command, and finally push the content in the local repository to the central code repository through a git push command. In this case, the file 1 in both the local repository and the central code repository is updated to the file 1-b. After that, if other programmers synchronize the central code repository, the file 1 in the local code repository after synchronization is the file 1-b.

A file may exist in a current (current) version and a base (base) version. The current version is a version in the work area. The base version is a previous version of the current version. The current version may be obtained by adding, deleting, or modifying code on the base version. The file 1 is further used as an example. The base version of the file 1 is the file 1-a, and the current version is the file 1-b.

The server 120 shown in FIG. 1 may perform code analysis to warn of a code conflict that may occur when each terminal writes code.

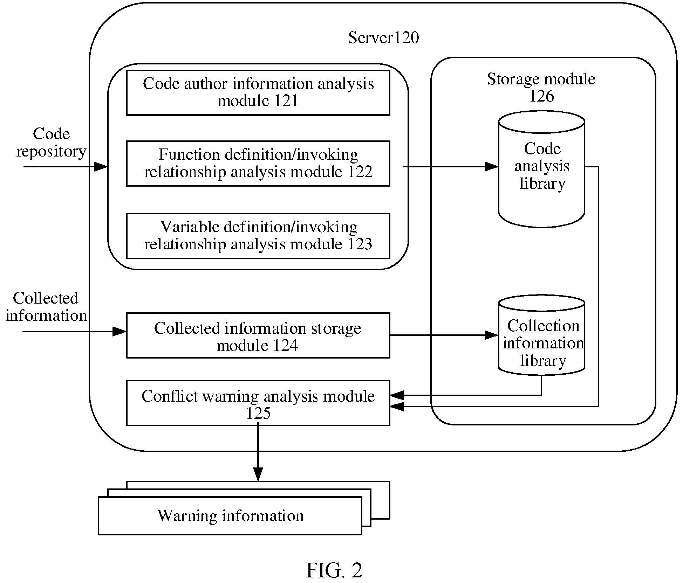

FIG. 2 is a schematic diagram of a structure of a server 120 shown in FIG. 1. As shown in FIG. 2, the server 120 includes a code author information analysis module 121, a function definition/invoking relationship analysis module 122, a variable definition/invoking relationship analysis module 123, a collected information storage module 124, a conflict warning analysis module 125, and a storage module 126.

The code author information analysis module 121 is configured to analyze code files in the central code repository (for example, by using a git blame command), determine author information of each code block in the code files, and store the author information of the code blocks in the code analysis library.

It should be understood that, in some embodiments, the central code repository may further be stored on the server 120 configured to perform code conflict warning, in other words, the server 120 both stores the code repository and performs the code conflict warning. In this case, the code author information analysis module 121 of the server 120 directly analyzes the code file in the local code repository.

In some other embodiments, the code repository may further be stored in another device or environment, for example, the code management device 110 shown in FIG. 1. In this case, the code author information analysis module 121 of the server 120 accesses the code repository in a remote access manner, and analyzes the code file in the code repository.

In some embodiments, code in a file may be compiled by a plurality of programmers. In this case, a segment of code compiled by each programmer has corresponding author information.

For example, the file 1 has a total of 20000 lines of code, where the 1^{st} line to the 5000^{th} line are compiled by a programmer A, the 501^{st} line to the 15000^{th} line are compiled by a programmer B, and the 15001^{st} line to the 20000^{th} line are compiled by a programmer C. In this case, author information of three code blocks may exist.

In some other embodiments, code in a file may be compiled by a programmer. In this case, the file has the author information of the programmer.

In some other embodiments, code in a plurality of files may be compiled by a programmer. In this case, the plurality of files may have only one piece of author information, and the author information is author information of the programmer that writes the plurality of files.

In addition to identity information (for example, any one or more of an email address, a name of the author, or a mobile phone number of the author) of the author, the author information of the code block stored in the code analysis library may further include location information of code compiled by the author.

For example, assuming that the file 1 has a total of 20000 lines of code, where the 1^{st} line to the 5000^{th} line are compiled by the programmer A, the 501^{st} line to the 15000^{th} line are compiled by the programmer B, and the 15001^{st} line to the 20000^{th} line are compiled by the programmer C. The author information stored in the code analysis library may be:
[file 1; [1:5000]; ID A]; [file 1; [5001:15000]; ID B]; [file 1; [15001:20000]; ID C], where
[file 1; [1:5000]; ID A] indicates that an author ID of the 1^{st} line to the 5000^{th} line of the file 1 is A; [file 1; [5001:15000]; ID B] indicates that an author ID of the 5001^{th} line to the 15000^{th} line of the file 1 is B; and [file 1; [15001:20000]; ID C] indicates that an author ID of the 15001^{th} line to the 20000^{th} line of the file 1 is C.

For another example, assuming that a file 2 is compiled by the programmer A, and a file 3 and a file 4 are compiled by the programmer B. In this case, author information stored in the code analysis library may be:
[file 2; ; ID A]; [file 3; ; ID B]; [file 4; ; ID C], where
[file 2; ; ID A] indicates that an author ID of the file 2 is A; [file 3; ; ID B] indicates that an author ID of the file 3 is B; and [file 4; ; ID C] indicates that an author ID of the file 4 is C.

For another example, assuming that the file 2 and the file 3 are compiled by the programmer A, and the file 4 and a file 5 are compiled by the programmer B. In this case, the author information stored in the code analysis library may be:
[file 2, file 3; ; ID A]; [file 4, file 5; ; ID B];, where
[file 2, file 3; ; ID A] indicates that author IDs of the file 2 and file 3 are A, and [file 4, file 5; ; ID B] indicates that author IDs of the file 4 and file 5 are B.

In some other embodiments, the author information may further include one or more of the following: a commit identifier (CommitID), a code repository ID (RepoID), or a project name (RepoName).

The function definition/invoking relationship analysis module 122 is configured to perform function relationship analysis on the code file in the central code repository, determine key information of the function, and store the determined key information of the function in the code analysis library.

Similarly, if the central code repository is stored on the server 120, the function definition/invoking relationship analysis module 122 may directly analyze the code file in the local code repository. If the central code repository is stored in the code management device 110, the function definition/invoking relationship analysis module 122 may access the code repository in a remote access manner, and analyze the code file in the code repository.

For example, the function definition/invoking relationship analysis module 122 may use a code parser (for example, jdt/cdt) to analyze the code file in the central code repository, obtain a corresponding function declaration (function declaration) and function invoking (function invoking) in each file, and record key information of the function. The recorded key information is stored in a function declaration list (FuncDeclList, function declaration list).

The key information of the function may include one or more of the following information: a name of the function, a parameter in the function, a return value in the function, location information of the function (for example, a start line and an end line of the function, a start line and an offset value of the function, or an end line and an offset value of the function), a class to which the function belongs, or a file name of the class to which the function belongs.

For another example, the function definition/invoking relationship analysis module 122 may further perform type analysis on an invoker that invokes the function, obtain a type name of the invoker, and store the type name in a function invoking list (FuncInvokeList, function invoking list). The type name of the invoker that invokes the function may also be used as the key information of the function.

For another example, the function definition/invoking relationship analysis module 122 may further traverse two lists FuncDeclList and FuncInvokeList respectively, determine a relationship between a function definition and a function invoking based on the function name, the parameter, and a function invoker type, and store the relationship in function declaration invoking matching information. The information may also be used as key information of the function.

For example, function B is invoked in function A. In this case, the function definition/invoking analysis module 122 may further obtain one or more of the following information as key information of the function A: a function name of the function B, a parameter of the function B, location information of the function B, a class to which the function B belongs, and a file name of the class to which the function B belongs. For another example, the function A invokes the function B, and the function B invokes function C. In this case, some related information (for example, one or more of a function name, a parameter, location information, a class to which the function belongs, and a file name of the class to which the function belongs) of the function C may also be used as key information of the function A. For ease of description, the foregoing information about the invoked function may be collectively referred to as invoked information.

In some embodiments, a depth of the invoked information may be set according to requirements. For example, assuming that the function A invokes the function B, the function B invokes the function C, and the function C invokes the function B. Assuming that the depth is 0. it may be unnecessary to determine related information (a function name, a parameter, location information, a class to which the function belongs, a file name of the class to which the function belongs, and the like) of the function B, the function C, and the function D as key information of the function A. Assuming that the depth is 1, the key information of the function A may include related information of the function B, and does not need to include related information of the function C and the function D. Assuming that the depth is 2, the key information of the function A may include related information of the function B and the function C, and does not need to include related information of the function D. Assuming that the depth is 3, the key information of the function A may include related information of the function B, the function C, and the function D.

The analysis result obtained by the function definition/invoking relationship analysis module 122 by analyzing the function, for example, key information of the function, a function declaration list, a function invoking list, and function declaration invoking matching information, are stored in the code analysis library.

The variable definition/invoking relationship analysis module 123 is configured to perform variable analysis on the code file in the central code repository, determine key information of the variable, and store the determined key information of the variable in the code analysis library.

Similarly, if the central code repository is stored on the server 120, the variable definition/invoking relationship analysis module 123 may directly analyze the code file in the local code repository. If the central code repository is stored in the code management device 110, the variable definition/invoking relationship analysis module 123 may access the code repository in a remote access manner and analyze the code file in the code repository.

The key information of the variable may include one or more of the following information: a name of the variable, location information of the variable (for example, a start line and an end line of the variable, a start line and an offset value of the variable, or an end line and an offset value of the variable), a type of the variable, or a variable value.

The key information of the function and the key information of the variable may be obtained by using an abstract syntax tree (AST, abstract syntax tree).

The collected information storage module 124 may be configured to obtain attribute information of a changed code block, and store the attribute information of the changed code block into a collection information library.

The conflict warning analysis module 125 is configured to trigger conflict warning analysis periodically or based on a particular event, analyze whether content stored in the collection information library conflicts with content in the code analysis library, generate warning information, and send the generated warning information to a corresponding terminal.

The storage module 126 may be configured to store the code analysis library and the collection information library. If the central code repository is stored in the server 120, the storage module 126 may be further configured to store the code file in the central code repository.

In some embodiments, the content stored in the storage module 126 may further be kept in another storage device or storage system. For example, the code analysis library and/or collection information library may be stored in an object storage service (OBS, object storage service) in the cloud.

Each terminal in the system 100 shown in FIG. 1 includes a collection agent module. The collection agent module collects code in a file being compiled; determines whether the code in the file being compiled changes with code of a corresponding file in a base version; and if the code changes, feeds back the change to the server 120.

The collection agent module may collect, according to a preset rule, code in the file being compiled.

In some embodiments, the preset rule may be collecting code in the file being compiled based on a time period.

For example, the collection agent module may be started when a program development application (for example, an integrated development environment (IDE, integrated development environment)) starts or opens the file being compiled, and start a timer. The timer may have a preset time period. When the timer reaches the time period, the code in the file is collected, and the collected code is compared with the code in the corresponding file to determine whether the code changes.

In some other embodiments, the preset rule may be collecting, based on a quantity of lines, code in a file being compiled.

For example, the collection agent module may detect a quantity of modified code lines in the file being compiled, and if the quantity of modified code lines is equal to a preset line quantity threshold, collect code in the file, and compare the collected code with code in a corresponding file to determine whether the code changes.

For another example, the collection agent module may further collect code in the file when the file being compiled is closed, and compare the collected code with the code in a corresponding file to determine whether the code changes.

For another example, the programmer may further manually trigger the collection agent module to perform code collection and comparison. For example, the programmer may trigger, by entering an instruction or clicking an icon in the IDE, the agent collection module to collect code in a file, and compare the collected code with code in a corresponding file to determine whether a change occurs.

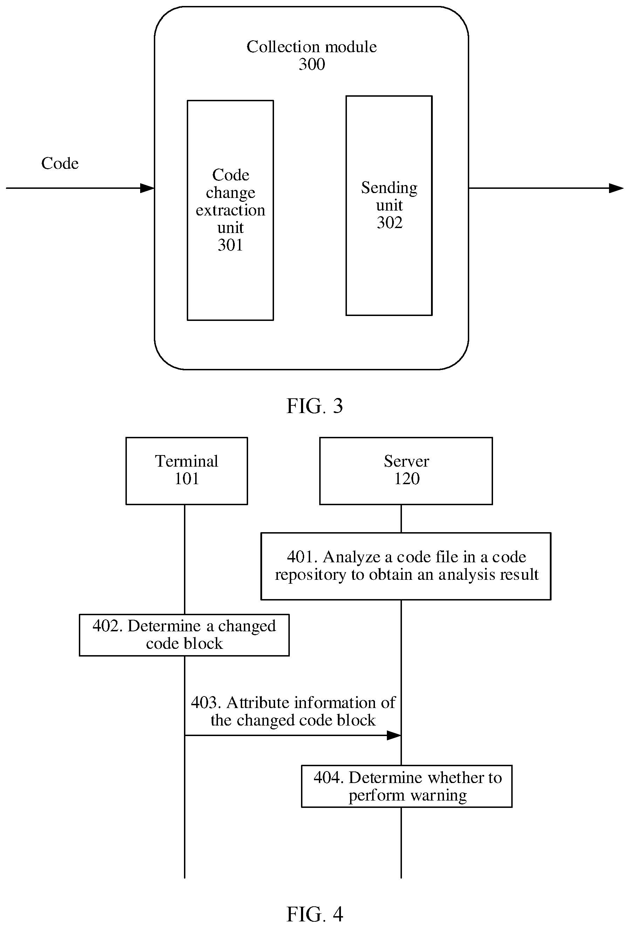

FIG. 3 is a schematic diagram of a collection agent module. As shown in FIG. 3, the collection agent module 300 may include a code change extraction unit 301 and a sending unit 302.

The code change extraction unit 301 in the collection agent module is configured to determine whether collected code changes.

The sending unit 302 is configured to send, when it is determined that the code changes, related information about the code change to the server 120.

FIG. 4 is a schematic flowchart of a code analysis method according to an embodiment of this application. In embodiments shown in FIG. 4, assuming that the code repository of the terminal 101 stores base versions of three files, and file names are file A.go, file B.go, and file C.go. The work area of the terminal 101 has current versions of the three files, and the file names are file A.go, file B.go, and file C.go. To distinguish files in the base version from those in the current version, A_base indicates file A.go in the base version, B_base indicates file B.go in the base version, C_base indicates file C.go in the base version, A_curr indicates file A.go in the current version, B_cur indicates file B.go in the current version, and C_curr indicates file C.go in the current version.

Assuming that B_cur is being compiled. For ease of description, in the following, a file being compiled is referred to as a first target file, a file corresponding to the first target file in the base version is referred to as a second target file, and a changed code block is referred to as a changed code block. In this case, the first target file is B_cur, and the second target file is B_base.

Assuming that content of the second target file is as follows:

| | |
|---|---|
| 1 | package main |
| 2 | import "fmt" |
| 3 | func main() { |
| 4 | var a int = 21 |
| 5 | var b int = 10 |
| 6 | var c int |
| 7 | c = a + b |
| 8 | fmt.Printf("The value of the first line - c is %d\n", c ) |
| 9 | c = a - b |
| 10 | fmt.Printf("The value of the second line - c is %d\n", c ) |
| 11 | c = a * b |
| 12 | fmt.Printf("The value of the third line - c is %d\n", c ) |
| 13 | c=a/b |
| 14 | fmt.Printf("The value of the fourth line - c is %d\n", c ) |
| 15 | c = a % b |
| 16 | fmt.Printf("The value of the fifth line - c is %d\n", c ) |
| 17 | a++ |
| 18 | fmt.Printf("The value of the sixth line - a is %d\n", a ) |
| 19 | a=21 |
| 20 | a-- |
| 21 | fmt.Printf("The value of the seventh line - a is %d\n", a ) |
| 22 | } |

Assuming that content of the first target file is as follows:

| | |
|---|---|
| 1 | package main |
| 2 | import "fmt" |
| 3 | func main() { |
| 4 | var a int = 11 |
| 5 | var b int = 2 |
| 6 | var c int |
| 7 | c = a + b |
| 8 | fmt.Printf("The value of the first line - c is %d\n", c ) |
| 9 | c = a - b |
| 10 | fmt.Printf("The value of the second line - c is %d\n", c ) |
| 11 | c = a * b |
| 12 | fmt.Printf("The value of the third line - c is %d\n", c ) |
| 13 | c=a/b |
| 14 | fmt.Printf("The value of the fourth line - c is %d\n", c ) |
| 15 | c = a % b |
| 16 | fmt.Printf("The value of the fifth line - c is %d\n", c ) |
| 17 | a++ |
| 18 | fmt.Printf("The value of the sixth line - a is %d\n", a ) |
| 19 | a=21 |
| 20 | a-- |
| 21 | fmt.Printf("The value of the seventh line - a is %d\n", a ) |
| 22 | } |

401. A server 120 analyzes a code file in a central code repository to obtain an analysis result. For a detailed analysis process of the code file by the server 120, refer to a related description in FIG. 2. For brevity, details are not described herein again.

402. A collection agent module 300 in a terminal 110 determines a changed code block.

For ease of description, the collection agent module 300 mentioned during describing embodiments shown in FIG. 4 is the collection agent module in the terminal 110.

The collection agent module 300 may determine, by comparing the first target file with the second target file, that the fourth line and the fifth line of code in the first target file are different from the fourth line and the fifth line of code in the second target file. Therefore, the collection agent module 300 may determine that the changed code block includes the fourth line and the fifth line of code in the first target file.

In addition, if a new line of code is inserted between the fourth line and the fifth line of the first target file, the changed code block determined by the collection agent module 300 includes the fifth line to the 22^{nd} line of code in the first target file.

Code in different files may be compared in an existing code comparison manner. For example, the diff function in Git may be used to compare the code in two files.

403. The collection agent module 300 feeds back attribute information of the changed code block to the server 120. The attribute information of the changed code block may include identity information of a changed file and a location of the changed code block in the changed file. The changed file is a file that includes the changed code block. The changed file in the foregoing example is the first target file.

The identity information of the changed file may include a file name of the changed file and path information for storing the changed file. In the foregoing example, the file name of the changed file is file B.go.

In some embodiments, the path information of the changed file may be a complete path of a folder storing the changed file in the terminal 110. For example, if the complete path of the file B.go in the terminal 110 is C:\Git\Study\Project 1\branch 1\file B.go, the complete path of the folder storing the file B.go is C:\Git\Study\Project 1\branch 1\, and the path information of the changed file may include the complete path.

In some other embodiments, the path information of the changed file may be a relative path of a folder storing the changed file. For example, if the complete path of the folder for storing the file B.go is C:\Git\Study\Project 1\branch 1\, all files in the code repository that includes the file B.go are stored in C:\Git\Study\Project 1. The complete path of the code file in the code repository may be divided into two parts: a public path and a relative path. All code files in the code repository are stored in the same public path, but the relative paths of different code files are different. For example, the complete path of the folder storing the file B.go file is C:\Git\Study\Project 1\branch 2\. It may be learned that the complete paths of the file A.go and the file B.go both include C:\Git\Study\Project 1. C:\Git\Study\Project 1 may be referred to as the public path. A relative path of the file A.go is branch 2\, and a relative path of the file B.go is branch 1\.

The identity information of the changed file includes the path information of the changed file, which can reduce a determining error caused by a file with a same name.

The location of the changed code block in the changed file may be indicated in different manners.

For example, the location of the changed code block in the changed file may be indicated by a start line and an end line of the changed code block. In this way, the location of the changed code block may be directly determined based on the start line and the end line. The first object file and the second object are further used as an example. If the start line and the end line indicate the location of the changed code block, the indication information may be [file B.go; C:\Git\Study\Project 1\branch 1\; 4: 5]. [file B.go; C:\Git\Study\Project 1\branch 1\;4: 5] indicates that the changed code block is in the fourth and fifth lines of the file B.go file in C:\Git\Study\Project 1\branch 1. It may be understood that, if the changed code has only one line, the start line and the end line in the indication information for indicating the location of the changed code block are the same.

For another example, a location of the changed code block in the changed file may be indicated by a start line and an offset value of the changed code block. A sum of the start line and offset value is the end line of the changed code block. In this way, the location of the changed code block may be determined by the start line and the offset value. The first object file and the second object are further used as an example. If the start line and the offset value indicate the location of the changed code block, the indication information may be [file B.go; C:\Git\Study\Project 1\branch 1\; 4, 1]. [file B.go; C:\Git\Study\Project 1\branch 1\file B.go; 4, 1] indicates that the changed code block is in the fourth line to the (4+1)^{th} line in the file B.go file in C:\Git\Study\Project 1\branch 1. It may be understood that, if the changed code has only one line, an offset value in the indication information for indicating the location of the changed code block is 0.

For another example, the location of the changed code block in the changed file may further be indicated by an end line and an offset value of the changed code block. An indication manner of indicating the location of the changed code block by using the end line and the offset value is similar to an indication manner of indicating the location of the changed code block by using the start line and the offset value. For brevity, details are not described herein again.

It may be understood that a format of each piece of information in this embodiment of this application is an example, but is not a specific limitation on the format.

In some embodiments, the attribute information of the changed code block may further include author information of the changed code block. The author information indicates the author of the changed code block. The author information of the changed code block may be identity information of the author, for example, any one or more of an email address, a name of the author, or a mobile phone number of the author.

For example, the information fed back by the collection agent module 300 to the server 120 may include the following content: DiffHunk={Hunk info: file B.go; C:\Git\Study\Project 1\branch 1\file B.go; HunkID: 1001; StartLine: 109; EndLine: 120; Version(Base/Current):1.01/1.02; Auther: ID A}. DiffHunk indicates the attribute information of the changed code block; Hunk info: file B.go; C:\Git\Study\Project 1\branch 1\file B.go; indicates that the identity information of the changed code block is the file B.go file in C:\Git\Study\Project 1\branch 1. HunkID: 1001 indicates that an identifier (ID, identifier) of the changed code block is 1001. StartLine: 109 indicates that a start line number of the changed code block is 109. EndLine: 120 indicates that an end line number of the changed code block is 120. Version(Base/Current):1.01/1.02 indicates that a base version number is 1.01 and a current version number is 1.02. Auther: ID A indicates that an author ID of the changed code block is ID A.

In some other embodiments, the server 120 may determine the changed code block and the location and the author of the changed code block on its own. For example, if the collection agent module 300 finds that the content of the first target file is different from that of the second target file, the collection agent module 300 may directly send the first target file to the server 120. The server 120 stores a file in the base version or obtains, in a remote access manner, the base version file stored in the code management device 110. The server 120 may determine the second target file from the base version file based on the received first target file, and then determine the changed code block and the location of the changed code block based on the first target file and the second target file. In addition, the first target file carries the author information of the first target file. Therefore, the server 120 may further determine the author of the changed code block based on the author information of the first target file.

404. The server 120 obtains the attribute information of the changed code block, and determines whether to warn a terminal in the distributed system.

In some embodiments, the server 120 may determine whether the corresponding file (that is, the second object file) in the base version includes the target code block that overlaps the location of the changed code block.

The location overlapping may be that the changed code block is a subset of the second object file. In other words, both the start line quantity and the end line quantity of the changed code block are less than the maximum line quantity of the code in the second target file.

For example, the start line of the changed code block is the fourth line, and the end line is the fifth line. A total quantity of lines of the code in the second target file is 22. In this case, it may be determined that the second target file includes a target code block whose location overlaps the location of the changed code block.

The location overlapping may also be that an intersection exists between the target code block and the second target file. In other words, the start line quantity of the changed code block is less than the maximum line quantity of the code in the second target file, but the end line quantity of the changed code block may be greater than the maximum line quantity of the code in the second target file.

For example, the start line of the changed code block is line 932 and the end line is line 1016. A total quantity of lines of the code in the second target file is 1000. In this case, it may be determined that the second target file includes a target code block whose location overlaps the location of the changed code block.

In some embodiments, if it is determined that there are target code blocks whose locations overlap, the server 120 may push the warning to the terminal in the distributed system.

In some embodiments, the server 120 may store the changed code block in a conflict list of updated code, and push the conflict list of updated code to the terminal. In some other embodiments, the server 120 may store the location and/or the author of the changed code block into the conflict list of updated code, and push the conflict list of updated code to the terminal. In other words, in some embodiments, the conflict list of updated code includes code in the updated code block. In some other embodiments, the conflict list of updated code may include only the location and/or the author of the updated code block.

In some embodiments, the server 120 may push the conflict list of updated code to all terminals in the distributed system. In this way, all programmers participated in developing the software may learn that a piece of code is changed by a programmer.

In some other embodiments, the server 120 may compare the author of the updated code block with the author of the target code block. If the author of the updated code block is different from the author of the target code block, first warning information may be sent to a terminal (hereinafter referred to as a first target terminal) used by the author of the target code block to write code, and the first warning information indicates that the target code block is modified. The first warning information may include any one or more of code in the updated code block, or a location or an author of the updated code block. In this way, the author of the target code block may learn that the code compiled by the author is updated by another person.

In some other embodiments, the server 120 may determine, based on key information stored in the code analysis library, whether the updated code block overlaps the particular code block.

If the code analysis library stores only the key information of the function, the particular code block is a function in the code analysis library. If the code analysis library stores only the key information of the variable, the particular code block is a variable in the code analysis library. If the code analysis library stores the key information of the function and the key information of the variable, the particular code block is a function or variable in the code analysis library.

Similarly, whether the updated code block overlaps with the particular code block may be completely or partially overlapped.

For example, the updated code block is in line 719 to line 730 of the second object file. A file in which a class to which the function A belongs is a second target file, and the function A is in line 719 to line 730 in the second target file. Then, it may be determined that the updated code block overlaps the particular code block.

For another example, the updated code block is in line 719 to line 730 of the second target file. A file in which a class to which the function A belongs is a second target file, and the function A is in line 719 to line 830 in the second target file. Then, it may be determined that the updated code block overlaps the particular code block.

If the updated code block overlaps with the particular code block, it may be determined that an object (the function or the variable) defined by the particular code block is modified. In this case, the second warning information may be sent to a second target terminal in the distributed system, and the second warning information indicates that the function or the variable defined by the particular code block changes. The second target terminal may include a terminal whose code is compiled that includes the function or the variable defined by the particular code block. The second target terminal may further include a terminal that uses and/or cites the function or the variable defined by the particular code block.

In some embodiments, if the updated code block overlaps with the particular code block, the changed code block may be analyzed to obtain key information (hereinafter referred to as first key information) of an object defined by the changed code block; and key information (hereinafter referred to as second key information) of an object defined by the particular code block is obtained from the code analysis library. Difference information between the first key information and the second key information is compared, and the difference information is sent to the second target terminal.

For example, assuming that both the changed code block and the particular code block define a function, and the changed code block changes a function name of the defined function and adds a new return value. In this case, the difference information may include an updated function name and an added return value. In some embodiments, the difference information may further include a function name before update.

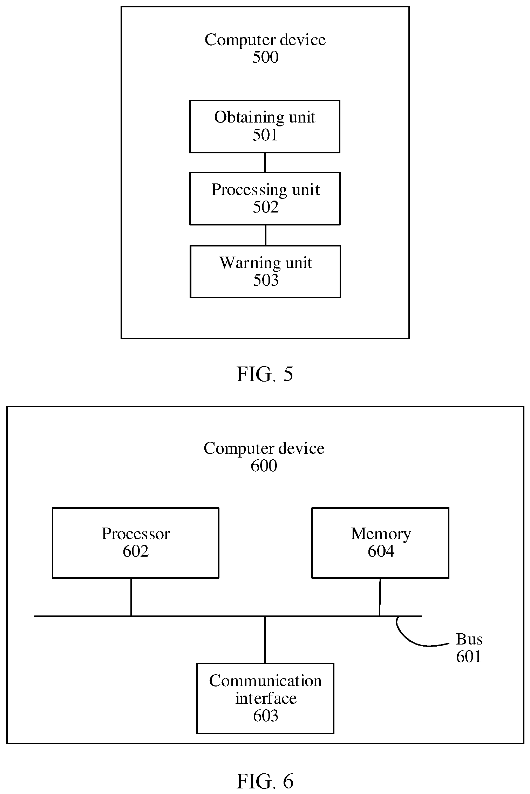

FIG. 5 is a schematic block diagram of a structure of a computer device according to an embodiment of this application. The computer device shown in FIG. 5 may be a server 120 in a system 100 shown in FIG. 1. As shown in FIG. 5, the computer device 500 includes an obtaining unit 501, a processing unit 502, and a warning unit 503.

The obtaining unit 501 is configured to obtain attribute information of a changed code block, where the attribute information of the changed code block includes identity information of a changed file and a location of the changed code block in the changed file, the changed code block is located in a terminal of a distributed system, and the distributed system includes a plurality of terminals configured to provide code compilation.

The processing unit 502 is configured to determine a base version of the changed file based on the identity information of the changed file.

The processing unit 502 is further configured to determine, based on the location of the changed code block in the changed file, whether the base version of the changed file includes a target code block that overlaps the location of the changed code block.

The warning unit 503 is configured to warn at least one terminal in the distributed system if the processing unit 502 determines that the base version of the changed file includes the target code block.

For specific functions and beneficial effects of the obtaining unit 501, the processing unit 502, and the warning unit 503, reference may be made to the descriptions of the foregoing embodiments. For brevity, details are not described herein again.

FIG. 6 is a schematic block diagram of a structure of a computer device according to an embodiment of this application. The computer device 600 includes a bus 601, a processor 602, a communication interface 603, and a memory 604. The processor 602, the memory 604, and the communication interface 603 communicate with each other through the bus 601. The processor 602 may be a field programmable gate array (field programmable gate array, FPGA), an application specific integrated circuit (application specific integrated circuit, ASIC), system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), another programmable logic device, a discrete gate or transistor logic device, a discrete hardware component, or another integrated chip. The memory 604 stores executable code included in a pathological image processing system. The processor 602 reads the executable code in the memory 604 to perform the method shown in the foregoing embodiment. The memory 604 may further include another software module, such as an operating system, required for running a process. The operating system may be LINUX^{™}, UNIX^{™}, WINDOWS^{™}, or the like.

Embodiments of this application further provides a chip system, including a logic circuit. The logic circuit is coupled to an input/output interface, and is configured to perform data transmission through the input/output interface, to perform the method shown in FIG. 4.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. A general purpose processor may be a microprocessor, or the processor may be any conventional processor, or the like. The steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories of the system and method described herein are intended to include, but are not limited to, these and any other suitable types of memories.

According to the method provided in embodiments of this application, this application further provides a computer program product. The computer program product includes computer program code. When the computer program code is run on a computer, the computer is enabled to perform the method in the embodiment shown in FIG. 4.

According to the method provided in embodiments of this application, this application further provides a computer-readable medium. The computer-readable medium stores program code. When the program code is run on a computer, the computer is enabled to perform the method in the embodiment shown in FIG. 4.

A person of ordinary skill in the art may be aware that, in combination with the examples described in embodiments disclosed in this specification, units and algorithm steps may be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A computer-implemented code analysis method, wherein the method is performed by a server (120), comprising:
obtaining (403) attribute information of a changed code block, wherein the attribute information of the changed code block comprises identity information of a changed file and a location of the changed code block in the changed file, the changed code block is located in a terminal (101-105) of a distributed system, and the distributed system comprises a plurality of terminals (101-105) configured to provide code compilation;
determining a base version of the changed file based on the identity information of the changed file;
determining, based on the location of the changed code block in the changed file, whether the base version of the changed file comprises a target code block that overlaps the location of the changed code block; and
warning (404) at least one terminal (101-105) in the distributed system if the base version of the changed file comprises the target code block,
wherein the warning (404) at least one terminal in the distributed system comprises:
storing the changed code block in a conflict list of changed code; and
pushing the conflict list of changed code to the at least one terminal in the distributed system.

2. The method according to claim 1, wherein the attribute information of the changed code block further comprises an author of the changed code block; and
the warning at least one terminal in the distributed system if the base version of the changed file comprises the target code block comprises:
determining that the author of the changed code block is different from an author of the target code block, and sending first warning information to a first target terminal in the distributed system, wherein the first target terminal is a terminal used by the author of the target code block, and the first warning information indicates that the target code block is modified.

3. The method according to claim 1 or claim 2, wherein the method further comprises:
determining whether the target code block overlaps a location of a particular code block in a code analysis library, wherein the particular code block comprises a code block for defining a function or a code block for defining a variable; and
sending, if the target code block overlaps the particular code block, second warning information to a second target terminal (101-105) in the distributed system, wherein code compiled by the second target terminal (101-105) comprises a function or a variable defined by the particular code block, and the second warning information indicates that the function or the variable defined by the particular code block changes.

4. The method according to claim 3, wherein if the target code block overlaps the particular code block, the method further comprises:
analyzing the changed code block, and determining key information of a first object defined by the changed code block;
determining key information of a second object defined by the target code block, wherein the first object and the second object are functions, or the first object and the second object are variables; and
comparing the key information of the first object with the key information of the second object, and determining difference information between the key information of the first object and the key information of the second object, wherein the second warning information further indicates the difference information.

5. The method according to claim 4, wherein if the first object and the second object are functions, the key information comprises any one or more of the following information: a name of the function, a parameter in the function, a return value in the function, a start line of the function, an end line of the function, a class to which the function belongs, a file name of the class to which the function belongs, a function name of another function called by the function, a parameter in the another function, a start line of the another function, an end line of the another function, a class to which the another function belongs, a file name of the class to which the another function belongs, and a type name of an invoker that invokes the function; or
if the first object and the second object are variables, the key information comprises one or more of the following information: a name of the variable, a start line of the variable, an end line of the variable, and a type of the variable.

6. The method according to any one of claims 1 to 5, wherein the obtaining attribute information of a changed code block comprises:
obtaining the attribute information of the changed code block that is sent by a collection agent module of the terminal (101-105) in the distributed system.

7. A computer device (500), wherein the computer device is a server (120), wherein the computing device (500) comprises:
an obtaining unit (501), configured to obtain attribute information of a changed code block, wherein the attribute information of the changed code block comprises identity information of a changed file and a location of the changed code block in the changed file, the changed code block is located in a terminal (101-105) of a distributed system, and the distributed system comprises a plurality of terminals (101-105) configured to provide code compilation;
a processing unit (502), configured to determine a base version of the changed file based on the identity information of the changed file, wherein
the processing unit (502) is further configured to determine, based on the location of the changed code block in the changed file, whether the base version of the changed file comprises a target code block that overlaps the location of the changed code block; and
a warning unit (503), configured to warn at least one terminal (101-105) in the distributed system if the processing unit (502) determines that the base version of the changed file comprises the target code block,
wherein the warning unit is specifically configured to store the changed code block in a conflict list of changed code, and push the conflict list of changed code to the at least one terminal in the distributed system.

8. The computer device according to claim 7, wherein the attribute information of the changed code block further comprises an author of the changed code block;
the processing unit is further configured to determine whether the author of the changed code block is the same as an author of the target code block; and
the warning unit is configured to send, if the processing unit determines that the author of the changed code block is different from the author of the target code block, first warning information to a first target terminal in the distributed system, wherein the first target terminal is a terminal used by the author of the target code block, and the first warning information indicates that the target code block is modified.

9. The computer device (500) according to claim 8, wherein the processing unit (502) is configured to determine, if the author of the changed code block is different from the author of the target code block, whether the target code block overlaps a location of a particular code block in a code analysis library, wherein the particular code block comprises a code block for defining a function or a code block for defining a variable; and
the warning unit (503) is configured to send, if the processing unit determines that the target code block overlaps the particular code block, second warning information to a second target terminal (101-105) in the distributed system, wherein code compiled by the second target terminal (101-105) comprises a function or a variable defined by the particular code block, and the second warning information indicates that the function or the variable defined by the particular code block changes.

10. The computer device (500) according to claim 9, wherein the processing unit (502) is configured to analyze, if the target code block overlaps the particular code block, the changed code block, and determine key information of a first object defined by the changed code block;
determine key information of a second object defined by the target code block, wherein the first object and the second object are functions, or the first object and the second object are variables; and
compare the key information of the first object with the key information of the second object, and determine difference information between the key information of the first object and the key information of the second object, wherein the second warning information further indicates the difference information.

11. The computer device (500) according to claim 9, wherein if the first object and the second object are functions, the key information comprises any one or more of the following information: a name of the function, a parameter in the function, a return value in the function, a start line of the function, an end line of the function, a class to which the function belongs, a file name of the class to which the function belongs, a function name of another function called by the function, a parameter in the another function, a start line of the another function, an end line of the another function, a class to which the another function belongs, a file name of the class to which the another function belongs, and a type name of an invoker that invokes the function; or
if the first object and the second object are variables, the key information comprises one or more of the following information: a name of the variable, a start line of the variable, an end line of the variable, a type of the variable, and a variable value.

12. The computer device (500) according to any one of claims 7 to 11, wherein the obtaining unit (501) is specifically configured to obtain the attribute information of the changed code block that is sent by a collection agent module (300) of the terminal (101-105) in the distributed system.

13. A computer-readable storage medium, wherein the computer-readable storage medium stores computer program code, and when the computer program code runs on a computer (600), the computer (600) is enabled to perform the method according to any one of claims 1 to 6.

14. A computer program product, including computer program code, wherein when the computer program code runs on a computer, the computer is enabled to perform the method according to any one of claims 1-6.

## Patentansprüche

1. Computerimplementiertes Codeanalyseverfahren, wobei das Verfahren von einem Server (120) ausgeführt wird, das umfasst:
Erhalten (403) von Attributinformationen eines geänderten Codeblocks, wobei die Attributinformationen des geänderten Codeblocks Identitätsinformationen einer geänderten Datei und einen Speicherort des geänderten Codeblocks in der geänderten Datei umfassen, sich der geänderte Codeblock in einer Endvorrichtung (101-105) eines verteilten Systems befindet, und das verteilte System eine Vielzahl von Endvorrichtungen (101-105) umfasst, die konfiguriert ist, um eine Codekompilierung bereitzustellen;
Bestimmen einer Basisversion der geänderten Datei basierend auf den Identitätsinformationen der geänderten Datei;
Bestimmen, basierend auf dem Speicherort des geänderten Codeblocks in der geänderten Datei, ob die Basisversion der geänderten Datei einen Zielcodeblock, der sich mit dem Speicherort des geänderten Codeblocks überschneidet, umfasst; und
Warnen (404) von mindestens einer Endvorrichtung (101-105) in dem verteilten System, wenn die Basisversion der geänderten Datei den Zielcodeblock umfasst,
wobei das Warnen (404) mindestens einer Endvorrichtung in dem verteilten System umfasst:
Speichern des geänderten Codeblocks in einer Konfliktliste des geänderten Codes; und
Schieben der Konfliktliste des geänderten Codes an mindestens eine Endvorrichtung in dem verteilten System.

2. Verfahren nach Anspruch 1, wobei die Attributinformationen des geänderten Codeblocks ferner einen Autor des geänderten Codeblocks umfassen; und
das Warnen von mindestens einer Endvorrichtung in dem verteilten System, wenn die Basisversion der geänderten Datei den Zielcodeblock umfasst:
Bestimmen, dass sich der Autor des geänderten Codeblocks von einem Autor des Zielcodeblocks unterscheidet, und Senden erster Warninformationen an eine erste Zielendvorrichtung in dem verteilten System, wobei die erste Zielendvorrichtung eine von dem Autor des Zielcodeblocks verwendete Endvorrichtung ist, und die ersten Warninformationen angeben, dass der Zielcodeblock geändert wurde.

3. Verfahren nach Anspruch 1 oder 2, wobei das Verfahren ferner umfasst:
Bestimmen, ob der Zielcodeblock einen Speicherort eines spezifischen Codeblocks in einer Codeanalysebibliothek überlappt, wobei der spezifische Codeblock einen Codeblock zum Definieren einer Funktion oder einen Codeblock zum Definieren einer Variablen umfasst; und
Senden zweiter Warninformationen an eine zweite Zielendvorrichtung (101-105) in dem verteilten System, wenn der Zielcodeblock den spezifischen Codeblock überlappt, wobei der von der zweiten Zielendvorrichtung (101-105) kompilierte Code eine Funktion oder eine Variable, die durch den spezifischen Codeblock definiert ist, umfasst und die zweiten Warninformationen angeben, dass sich die Funktion oder die Variable, die durch den spezifischen Codeblock definiert ist, ändert.

4. Verfahren nach Anspruch 3, wobei das Verfahren, wenn der Zielcodeblock den spezifischen Codeblock überlappt, ferner umfasst:
Analysieren des geänderten Codeblocks und Bestimmen von Schlüsselinformationen eines ersten Objekts, das durch den geänderten Codeblock definiert ist;
Bestimmen von Schlüsselinformationen eines zweiten Objekts, das durch den Zielcodeblock definiert ist, wobei das erste Objekt und das zweite Objekt Funktionen sind oder das erste Objekt und das zweite Objekt Variablen sind; und
Vergleichen der Schlüsselinformationen des ersten Objekts mit den Schlüsselinformationen des zweiten Objekts, und Bestimmen von Differenzinformationen zwischen den Schlüsselinformationen des ersten Objekts und den Schlüsselinformationen des zweiten Objekts, wobei die zweiten Warninformationen ferner die Differenzinformationen angeben.

5. Verfahren nach Anspruch 4, wobei, wenn das erste Objekt und das zweite Objekt Funktionen sind, die Schlüsselinformationen eine oder mehrere der folgenden Informationen umfassen: einen Namen der Funktion, einen Parameter in der Funktion, einen Rückgabewert in der Funktion, eine Startzeile der Funktion, eine Endzeile der Funktion, eine Klasse, zu der die Funktion gehört, einen Dateinamen der Klasse, zu der die Funktion gehört, einen Funktionsnamen einer anderen Funktion, die von der Funktion aufgerufen wird, einen Parameter in der anderen Funktion, eine Startzeile der anderen Funktion, eine Endzeile der anderen Funktion, eine Klasse, zu der die andere Funktion gehört, einen Dateinamen der Klasse, zu der die andere Funktion gehört, und einen Typnamen eines Aufrufers, der die Funktion aufruft; oder
wenn das erste Objekt und das zweite Objekt Variablen sind, die Schlüsselinformationen eine oder mehrere der folgenden Informationen umfassen: einen Namen der Variablen, eine Startzeile der Variablen, eine Endzeile der Variablen und einen Typ der Variablen.

6. Verfahren nach einem der Ansprüche 1 bis 5, wobei das Erhalten von Attributinformationen eines geänderten Codeblocks umfasst:
Erhalten der Attributinformationen des geänderten Codeblocks, der von einem Sammelagentenmodul der Endvorrichtung (101-105) in dem verteilten System gesendet wird.

7. Computervorrichtung (500), wobei die Computervorrichtung ein Server (120) ist, wobei die Computervorrichtung (500) umfasst:
eine Erhaltungseinheit (501), die konfiguriert ist, um Attributinformationen eines geänderten Codeblocks zu beschaffen, wobei die Attributinformationen des geänderten Codeblocks Identitätsinformationen einer geänderten Datei und einen Speicherort des geänderten Codeblocks in der geänderten Datei umfassen, sich der geänderte Codeblock in einer Endvorrichtung (101-105) eines verteilten Systems befindet und das verteilte System eine Vielzahl von Endvorrichtungen (101-105) umfasst, die konfiguriert ist, um eine Codekompilierung bereitzustellen;
eine Verarbeitungseinheit (502), die konfiguriert ist, um eine Basisversion der geänderten Datei basierend auf den Identitätsinformationen der geänderten Datei zu bestimmen, wobei
die Verarbeitungseinheit (502) ferner konfiguriert ist, um basierend auf dem Speicherort des geänderten Codeblocks in der geänderten Datei zu bestimmen, ob die Basisversion der geänderten Datei einen Zielcodeblock, der sich mit dem Speicherort des geänderten Codeblocks überlappt, umfasst; und
eine Warneinheit (503), die konfiguriert ist, um mindestens eine Endvorrichtung (101-105) in dem verteilten System zu warnen, wenn die Verarbeitungseinheit (502) bestimmt, dass die Basisversion der geänderten Datei den Zielcodeblock umfasst,
wobei die Warneinheit speziell konfiguriert ist, um den geänderten Codeblock in einer Konfliktliste mit geändertem Code zu speichern, und die Konfliktliste mit geändertem Code an mindestens eine Endvorrichtung in dem verteilten System zu schieben.

8. Computervorrichtung nach Anspruch 7, wobei die Attributinformationen des geänderten Codeblocks ferner einen Autor des geänderten Codeblocks umfassen;
die Verarbeitungseinheit ferner konfiguriert ist, um zu bestimmen, ob der Autor des geänderten Codeblocks derselbe wie ein Autor des Zielcodeblocks ist; und
die Warneinheit konfiguriert ist, um, wenn die Verarbeitungseinheit bestimmt, dass sich der Autor des geänderten Codeblocks von dem Autor des Zielcodeblocks unterscheidet, erste Warninformationen an eine erste Zielendvorrichtung in dem verteilten System zu senden, wobei die erste Zielendvorrichtung eine von dem Autor des Zielcodeblocks verwendete Endvorrichtung ist, und die ersten Warninformationen angeben, dass der Zielcodeblock geändert wurde.

9. Computervorrichtung (500) nach Anspruch 8, wobei die Verarbeitungseinheit (502) konfiguriert ist, um zu bestimmen, ob sich der Autor des geänderten Codeblocks von dem Autor des Zielcodeblocks unterscheidet, ob sich der Zielcodeblock mit einem Speicherort eines spezifischen Codeblocks in einer Codeanalysebibliothek überschneidet, wobei der spezifische Codeblock einen Codeblock zum Definieren einer Funktion oder einen Codeblock zum Definieren einer Variablen umfasst; und
die Warneinheit (503) konfiguriert ist, um, wenn die Verarbeitungseinheit bestimmt, dass der Zielcodeblock den spezifischen Codeblock überlappt, zweite Warninformationen an eine zweite Zielendvorrichtung (101-105) in dem verteilten System zu senden, wobei der von der zweiten Zielendvorrichtung (101-105) kompilierte Code eine Funktion oder eine Variable, die durch den spezifischen Codeblock definiert ist, umfasst und die zweiten Warninformationen angeben, dass sich die Funktion oder die Variable, die durch den spezifischen Codeblock definiert ist, ändert.

10. Computervorrichtung (500) nach Anspruch 9, wobei die Verarbeitungseinheit (502) konfiguriert ist, um zu analysieren, ob der Zielcodeblock den spezifischen Codeblock, den geänderten Codeblock überlappt, und Schlüsselinformationen eines ersten Objekts, das durch den geänderten Codeblock definiert ist, zu bestimmen;
Bestimmen von Schlüsselinformationen eines zweiten Objekts, das durch den Zielcodeblock definiert ist, wobei das erste Objekt und das zweite Objekt Funktionen sind oder das erste Objekt und das zweite Objekt Variablen sind; und
Vergleichen der Schlüsselinformationen des ersten Objekts mit den Schlüsselinformationen des zweiten Objekts, und Bestimmen von Differenzinformationen zwischen den Schlüsselinformationen des ersten Objekts und den Schlüsselinformationen des zweiten Objekts, wobei die zweiten Warninformationen ferner die Differenzinformationen angeben.

11. Computervorrichtung (500) nach Anspruch 9, wobei, wenn das erste Objekt und das zweite Objekt Funktionen sind, die Schlüsselinformationen beliebige eine oder mehrere der folgenden Informationen umfassen: einen Namen der Funktion, einen Parameter in der Funktion, einen Rückgabewert in der Funktion, eine Startzeile der Funktion, eine Endzeile der Funktion, eine Klasse, zu der die Funktion gehört, einen Dateinamen der Klasse, zu der die Funktion gehört, einen Funktionsnamen einer anderen Funktion, die von der Funktion aufgerufen wird, einen Parameter in der anderen Funktion, eine Startzeile der anderen Funktion, eine Endzeile der anderen Funktion, eine Klasse, zu der die andere Funktion gehört, einen Dateinamen der Klasse, zu der die andere Funktion gehört, und einen Typnamen eines Aufrufers, der die Funktion aufruft; oder
wenn das erste Objekt und das zweite Objekt Variablen sind, die Schlüsselinformationen eine oder mehrere der folgenden Informationen umfassen: einen Namen der Variablen, eine Startzeile der Variablen, eine Endzeile der Variablen, einen Typ der Variablen und einen Variablenwert.

12. Computervorrichtung (500) nach einem der Ansprüche 7 bis 11, wobei die Erhaltungseinheit (501) speziell konfiguriert ist, um die Attributinformationen des geänderten Codeblocks zu erhalten, der von einem Sammelagentenmodul (300) der Endvorrichtung (101-105) in dem verteilten System gesendet wird.

13. Computerlesbares Speichermedium, wobei das computerlesbare Speichermedium Computerprogrammcode speichert, und, wenn der Computerprogrammcode auf einem Computer (600) ausgeführt wird, der Computer (600) aktiviert wird, um das Verfahren nach einem der Ansprüche 1 bis 6 durchzuführen.

14. Computerprogrammprodukt, das ein Computerprogramm einschließt, wobei, wenn das Computerprogramm auf einem Computer ausgeführt wird, der Computer aktiviert wird, das Verfahren nach einem der Ansprüche 1 bis 6 durchzuführen.

## Revendications

1. Procédé d'analyse de code mis en œuvre par ordinateur, dans lequel le procédé est réalisé par un serveur (120), comprenant :
l'obtention (403) d'informations d'attribut d'un bloc de code modifié, dans lequel les informations d'attribut du bloc de code modifié comprennent des informations d'identité d'un fichier modifié et un emplacement du bloc de code modifié dans le fichier modifié, le bloc de code modifié est situé dans un terminal (101 à 105) d'un système distribué, et le système distribué comprend une pluralité de terminaux (101 à 105) configurés pour fournir une compilation de codes ;
la détermination d'une version de base du fichier modifié sur la base des informations d'identité du fichier modifié ;
le fait de déterminer, sur la base de l'emplacement du bloc de code modifié dans le fichier modifié, si la version de base du fichier modifié comprend un bloc de code cible qui chevauche l'emplacement du bloc de code modifié ; et
le fait d'avertir (404) au moins un terminal (101 à 105) dans le système distribué si la version de base du fichier modifié comprend le bloc de code cible,
dans lequel le fait d'avertir (404) au moins un terminal dans le système distribué comprend :
le stockage du bloc de code modifié dans une liste de conflits de code modifié ; et
le fait de pousser la liste de conflits de code modifié vers l'au moins un terminal dans le système distribué.

2. Procédé selon la revendication 1, dans lequel les informations d'attribut du bloc de code modifié comprennent en outre un auteur du bloc de code modifié ; et
le fait d'avertir au moins un terminal dans le système distribué, si la version de base du fichier modifié comprend le bloc de code cible, comprend :
le fait de déterminer que l'auteur du bloc de code modifié est différent d'un auteur du bloc de code cible, et l'envoi de premières informations d'avertissement à un premier terminal cible dans le système distribué, dans lequel le premier terminal cible est un terminal utilisé par l'auteur du bloc de code cible, et les premières informations d'avertissement indiquent que le bloc de code cible est modifié.

3. Procédé selon la revendication 1 ou la revendication 2, dans lequel le procédé comprend en outre :
le fait de déterminer si le bloc de code cible chevauche un emplacement d'un bloc de code particulier dans une bibliothèque d'analyse de code, dans lequel le bloc de code particulier comprend un bloc de code permettant de définir une fonction ou un bloc de code permettant de définir une variable ; et
l'envoi, si le bloc de code cible chevauche le bloc de code particulier, de secondes informations d'avertissement à un second terminal cible (101 à 105) dans le système distribué, dans lequel un code compilé par le second terminal cible (101 à 105) comprend une fonction ou une variable définie par le bloc de code particulier, et les secondes informations d'avertissement indiquent que la fonction ou la variable définie par le bloc de code particulier est modifiée.

4. Procédé selon la revendication 3, dans lequel si le bloc de code cible chevauche le bloc de code particulier, le procédé comprend en outre :
l'analyse du bloc de code modifié et la détermination d'informations clés d'un premier objet défini par le bloc de code modifié ;
la détermination d'informations clés d'un second objet défini par le bloc de code cible, dans lequel le premier objet et le second objet sont des fonctions, ou le premier objet et le second objet sont des variables ; et
la comparaison des informations clés du premier objet avec les informations clés du second objet, et la détermination d'informations de différence entre les informations clés du premier objet et les informations clés du second objet, dans lequel les secondes informations d'avertissement indiquent en outre les informations de différence.

5. Procédé selon la revendication 4, dans lequel, si le premier objet et le second objet sont des fonctions, les informations clés comprennent une ou plusieurs quelconques parmi les informations suivantes : un nom de la fonction, un paramètre dans la fonction, une valeur de retour dans la fonction, une ligne de début de la fonction, une ligne de fin de la fonction, une classe à laquelle appartient la fonction, un nom de fichier de la classe à laquelle appartient la fonction, un nom de fonction d'une autre fonction appelée par la fonction, un paramètre dans l'autre fonction, une ligne de début de l'autre fonction, une ligne de fin de l'autre fonction, une classe à laquelle appartient l'autre fonction, un nom de fichier de la classe à laquelle appartient l'autre fonction, et un nom de type d'un invocateur qui invoque la fonction ; ou
si le premier objet et le second objet sont des variables, les informations clés comprennent une ou plusieurs parmi les informations suivantes : un nom de la variable, une ligne de début de la variable, une ligne de fin de la variable et un type de la variable.

6. Procédé selon l'une quelconque des revendications 1 à 5, dans lequel l'obtention d'informations d'attribut d'un bloc de code modifié comprend :
l'obtention des informations d'attribut du bloc de code modifié qui est envoyé par un module d'agent de collecte du terminal (101 à 105) dans le système distribué.

7. Dispositif informatique (500), dans lequel le dispositif informatique est un serveur (120), dans lequel le dispositif informatique (500) comprend :
une unité d'obtention (501), configurée pour obtenir des informations d'attribut d'un bloc de code modifié, dans lequel les informations d'attribut du bloc de code modifié comprennent des informations d'identité d'un fichier modifié et un emplacement du bloc de code modifié dans le fichier modifié, le bloc de code modifié est situé dans un terminal (101 à 105) d'un système distribué, et le système distribué comprend une pluralité de terminaux (101 à 105) configurés pour fournir une compilation de codes ;
une unité de traitement (502), configurée pour déterminer une version de base du fichier modifié sur la base des informations d'identité du fichier modifié, dans lequel l'unité de traitement (502) est en outre configurée pour déterminer, sur la base de l'emplacement du bloc de code modifié dans le fichier modifié, si la version de base du fichier modifié comprend un bloc de code cible qui chevauche l'emplacement du bloc de code modifié ; et
une unité d'avertissement (503), configurée pour avertir au moins un terminal (101 à 105) dans le système distribué si l'unité de traitement (502) détermine que la version de base du fichier modifié comprend le bloc de code cible,
dans lequel l'unité d'avertissement est particulièrement configurée pour stocker le bloc de code modifié dans une liste de conflits de codes modifiés, et pousser la liste de conflits de codes modifiés vers l'au moins un terminal dans le système distribué.

8. Dispositif informatique selon la revendication 7, dans lequel les informations d'attribut du bloc de code modifié comprennent en outre un auteur du bloc de code modifié ; l'unité de traitement est en outre configurée pour déterminer si l'auteur du bloc de code modifié est le même qu'un auteur du bloc de code cible ; et
l'unité d'avertissement est configurée pour envoyer, si l'unité de traitement détermine que l'auteur du bloc de code modifié est différent de l'auteur du bloc de code cible, des premières informations d'avertissement à un premier terminal cible dans le système distribué, dans lequel le premier terminal cible est un terminal utilisé par l'auteur du bloc de code cible, et les premières informations d'avertissement indiquent que le bloc de code cible est modifié.

9. Dispositif informatique (500) selon la revendication 8, dans lequel l'unité de traitement (502) est configurée pour déterminer, si l'auteur du bloc de code modifié est différent de l'auteur du bloc de code cible, si le bloc de code cible chevauche un emplacement d'un bloc de code particulier dans une bibliothèque d'analyse de code, dans lequel le bloc de code particulier comprend un bloc de code permettant de définir une fonction ou un bloc de code permettant de définir une variable ; et
l'unité d'avertissement (503) est configurée pour envoyer, si l'unité de traitement détermine que le bloc de code cible chevauche le bloc de code particulier, des secondes informations d'avertissement à un second terminal cible (101 à 105) dans le système distribué, dans lequel un code compilé par le second terminal cible (101 à 105) comprend une fonction ou une variable définie par le bloc de code particulier, et les secondes informations d'avertissement indiquent que la fonction ou la variable définie par le bloc de code particulier est modifiée.

10. Dispositif informatique (500) selon la revendication 9, dans lequel l'unité de traitement (502) est configurée pour analyser, si le bloc de code cible chevauche le bloc de code particulier, le bloc de code modifié, et déterminer des informations clés d'un premier objet défini par le bloc de code modifié ;
déterminer des informations clés d'un second objet défini par le bloc de code cible, dans lequel le premier objet et le second objet sont des fonctions, ou le premier objet et le second objet sont des variables ; et
comparer les informations clés du premier objet avec les informations clés du second objet, et déterminer des informations de différence entre les informations clés du premier objet et les informations clés du second objet, dans lequel les secondes informations d'avertissement indiquent en outre les informations de différence.

11. Dispositif informatique (500) selon la revendication 9, dans lequel, si le premier objet et le second objet sont des fonctions, les informations clés comprennent une ou plusieurs quelconques des informations suivantes : un nom de la fonction, un paramètre dans la fonction, une valeur de retour dans la fonction, une ligne de début de la fonction, une ligne de fin de la fonction, une classe à laquelle appartient la fonction, un nom de fichier de la classe à laquelle appartient la fonction, un nom de fonction d'une autre fonction appelée par la fonction, un paramètre dans l'autre fonction, une ligne de début de l'autre fonction, une ligne de fin de l'autre fonction, une classe à laquelle appartient l'autre fonction, un nom de fichier de la classe à laquelle appartient l'autre fonction, et un nom de type d'un invocateur qui invoque la fonction ; ou
si le premier objet et le second objet sont des variables, les informations clés comprennent une ou plusieurs parmi les informations suivantes : un nom de la variable, une ligne de début de la variable, une ligne de fin de la variable, un type de la variable et une valeur de la variable.

12. Dispositif informatique (500) selon l'une quelconque des revendications 7 à 11, dans lequel l'unité d'obtention (501) est particulièrement configurée pour obtenir les informations d'attribut du bloc de code modifié qui est envoyé par un module d'agent de collecte (300) du terminal (101 à 105) dans le système distribué.

13. Support de stockage lisible par ordinateur, dans lequel le support de stockage lisible par ordinateur stocke un code de programme informatique, et lorsque le code de programme informatique est exécuté sur un ordinateur (600), l'ordinateur (600) est en mesure de réaliser le procédé selon l'une quelconque des revendications 1 à 6.

14. Produit-programme informatique, comportant un code de programme informatique, dans lequel, lorsque le code de programme informatique est exécuté sur un ordinateur, l'ordinateur est en mesure de réaliser le procédé selon l'une quelconque des revendications 1 à 6.
